# EUROPEAN PATENT APPLICATION

(11) **EP 4 456 598 A1**
(43) Date of publication of application: **30.10.2024**
(21) Application number: 24169330.8
(22) Date of filing: 09.04.2024
(51) Int. Cl.: H04W 24/04, H04L 41/0677, H04W 88/08, H04L 41/0631

(54) **DETECTING COMMUNICATION ERROR**

(30) Priority: 24.04.2023 FI 20235451
(71) Applicant: Nokia Technologies Oy, 02610 Espoo (FI)
(72) Inventor: ARJONA, Andres, Tokyo, 153-0043 (JP); BALASUBRAMANIAM, Sankaran, 560075 Bangalore (IN); BULAKCI, Ömer, 80997 Munich (DE); KORDYBACH, Krzysztof, 51-691 Wroclaw (PL)
(74) Representative: Bryers Intellectual Property Ltd

(57) **Abstract**

Embodiments of the present disclosure relate to devices, methods, apparatuses and co9mputer readable media for node failure identification and recovery. In the embodiments, a first network device for a radio access network detects an error of communication over a first interface between the first network device and a third network device. The first network device transmits to a second network device of the radio access network, a request for the second network device to check status of a second interface between the second network device and the third network device. Then the first network device receives, from the second network device, status information on the second interface.

## Description

### FIELD

Various example embodiments relate to the field of telecommunication and in particular, to methods, devices, apparatuses, and computer readable storage media for detecting communication error.

### BACKGROUND

The next generation (NG) radio access network (RAN) can have a split architecture where a next generation Node-B (gNB) comprising a gNB Central Unit Control Plane (gNB-CU-CP), multiple gNB Central Unit User Planes (gNB-CU-UPs) and multiple gNB Distributed Units (gNB-DUs). One gNB-DU may be connected to only one gNB-CU-CP, one gNB-CU-CP may be connected to one or more gNB-DUs. One gNB-CU-UP may be connected to only one gNB-CU-CP, one gNB-CU-CP may be connected to one or more gNB-CU-UPs. For resiliency, a gNB-DU and/or a gNB-CU-UP may be connected to multiple gNB-CU-CPs by appropriate implementation. The flexible hardware allows scalable and cost-effective network deployments, and the split architecture allows for coordination for performance features, load management and real-time performance optimization.

### SUMMARY

In general, example embodiments of the present disclosure provide a solution related to an admission control enhancement for prioritized users.

In a first aspect, there is provided a first network device for a radio access network. The first network device comprises at least one processor and at least one memory storing instructions that, when executed by the at least one processor, cause the first network device at least to: detect an error of communication over a first interface between the first network device and a third network device; transmit to a second network device of the radio access network, a request for the second network device to check status of a second interface between the second network device and the third network device; and receive, from the second network device, status information on the second interface.

In a second aspect, there is provided a second network device for a radio access network. The second network device comprises at least one processor and at least one memory storing instructions that, when executed by the at least one processor, cause the second network device at least to: receive, from a first network device of the radio access network, via an interface between the first network device and the second network device, a request for the second network device to check status of a different interface between the second network device and a third network device; and transmit, to the first network device, status information on the different interface via the interface

In a third aspect, there is provided a method implemented at a first network device for a radio access network. The method comprises detecting, at a first network device for a radio access network an error of communication over a first interface between the first network device and a third network device; transmitting to a second network device of the radio access network, a request for the second network device to check status of a second interface between the second network device and the third network device; and receiving, from the second network device, status information on the second interface.

In a fourth aspect, there is provided a method implemented at a second network device for a radio access network. The method comprises receiving at a second network device for a radio access network, from a first network device of the radio access network, via an interface between the first network device and the second network device, a request for the second network device to check status of a different interface between the second network device and a third network device; and transmitting, to the first network device, status information on the different interface via the interface.

In a fifth aspect, there is provided an apparatus. The apparatus comprises means for detecting, at a first network device for a radio access network an error of communication over a first interface between the first network device and a third network device; means for transmitting to a second network device of the radio access network, a request for the second network device to check status of a second interface between the second network device and the third network device; and means for receiving, from the second network device, status information on the second interface.

In a sixth aspect, there is provided an apparatus. The apparatus comprises means for receiving at a second network device for a radio access network, from a first network device of the radio access network, via an interface between the first network device and the second network device, a request for the second network device to check status of a different interface between the second network device and a third network device; and means for transmitting, to the first network device, status information on the different interface via the interface.

In a seventh aspect, there is provided a non-transitory computer readable medium comprising program instructions for causing an apparatus to perform at least the method according to any one of the above third to fourth aspect.

In an eighth aspect, there is provided a computer program comprising instructions, which, when executed by an apparatus, cause the apparatus at least to perform at least the method according to any one of the above third to fourth aspect.

In a ninth aspect, there is provided a first network device for a radio access network. The first network device comprises detecting circuitry configured to detect an error of communication over a first interface between the first network device and a third network device; transmitting circuitry configured to transmit to a second network device of the radio access network, a request for the second network device to check status of a second interface between the second network device and the third network device; and receiving circuitry configured to receive, from the second network device, status information on the second interface.

In a tenth aspect, there is provided a second network device for a radio access network. The second network device comprises receiving circuitry configured to receive, from a first network device of the radio access network, via an interface between the first network device and the second network device, a request for the second network device to check status of a different interface between the second network device and a third network device; and transmitting circuitry configured to transmit, to the first network device, status information on the different interface via the interface.

It is to be understood that the summary section is not intended to identify key or essential features of embodiments of the present disclosure, nor is it intended to be used to limit the scope of the present disclosure. Other features of the present disclosure will become easily comprehensible through the following description.

### BRIEF DESCRIPTION OF THE DRAWINGS

Some example embodiments will now be described with reference to the accompanying drawings, where:
FIG. 1 is a schematic block diagram illustrating a split architecture for a next generation Node-B (gNB).
FIG. 2 is a schematic block diagram illustrating an example deployment according to an example embodiment of the present disclosure.
FIG. 3 illustrates a signaling flow between the network devices according to some example embodiments of the present disclosure;
FIG. 4 illustrates an example process according to some example embodiments of the present disclosure;
FIG. 5 illustrates a flowchart of a method according to some embodiments of the present disclosure;
FIG. 6 illustrates a flowchart of a method according to some embodiments of the present disclosure;
FIG. 7 illustrates a simplified block diagram of a device that is suitable for implementing some example embodiments of the present disclosure; and
FIG. 8 illustrates a block diagram of an example of a computer readable medium in accordance with some example embodiments of the present disclosure.

Throughout the drawings, the same or similar reference numerals represent the same or similar element.

### DETAILED DESCRIPTION

Principle of the present disclosure will now be described with reference to some example embodiments. It is to be understood that these embodiments are described only for the purpose of illustration and help those skilled in the art to understand and implement the present disclosure, without suggesting any limitation as to the scope of the disclosure. The disclosure described herein can be implemented in various manners other than the ones described below.

In the following description and claims, unless defined otherwise, all technical and scientific terms used herein have the same meaning as commonly understood by one of ordinary skills in the art to which this disclosure belongs.

References in the present disclosure to "one embodiment," "an embodiment," "an example embodiment," and the like indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

It shall be understood that although the terms "first" and "second" etc. may be used herein to describe various elements, these elements should not be limited by these terms. These terms are only used to distinguish one element from another. For example, a first element could be termed a second element, and similarly, a second element could be termed a first element, without departing from the scope of example embodiments. As used herein, the term "and/or" includes any and all combinations of one or more of the listed terms.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof. As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

As used herein, the term "communication network" refers to a network following any suitable communication standards, such as Long Term Evolution (LTE), LTE-Advanced (LTE-A), 5G (New Radio), Wideband Code Division Multiple Access (WCDMA), HighSpeed Packet Access (HSPA), Narrow Band Internet of Things (NB-IoT) and so on. Furthermore, the communications between a terminal device and a network device in the communication network may be performed according to any suitable generation communication protocols, including, but not limited to, the third generation (3G), the fourth generation (4G), 4.5G, the future fifth generation (5G) communication protocols, and/or any other protocols either currently known or to be developed in the future. Embodiments of the present disclosure may be applied in various communication systems. Given the rapid development in communications, there will of course also be future type communication technologies and systems with which the present disclosure may be embodied. It should not be seen as limiting the scope of the present disclosure to only the aforementioned system.

As used herein, the term "network device" refers to a node in a communication network via which a terminal device accesses the network and receives services therefrom. The network device may be referred to as "network node". The network device may refer to a base station (BS) or an access point (AP), for example, a node B (NodeB or NB), an evolved NodeB (eNodeB or eNB), a New Radio (NR) NB (also referred to as a gNB), a Remote Radio Unit (RRU), a radio header (RH), a remote radio head (RRH), a relay, a low power node such as a femto, a pico, and so forth, depending on the applied terminology and technology.

The term "terminal device" refers to any end device that may be capable of wireless communication. By way of example rather than limitation, a terminal device may also be referred to as a communication device, user equipment (UE), a Subscriber Station (SS), a Portable Subscriber Station, a Mobile Station (MS), or an Access Terminal (AT). The terminal device may include, but not limited to, a mobile phone, a cellular phone, a smart phone, voice over IP (VoIP) phones, wireless local loop phones, a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), USB dongles, smart devices, wireless customer-premises equipment (CPE), an Internet of Things (loT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. In the following description, the terms "terminal device", "communication device", "terminal", "user equipment" and "UE" may be used interchangeably.

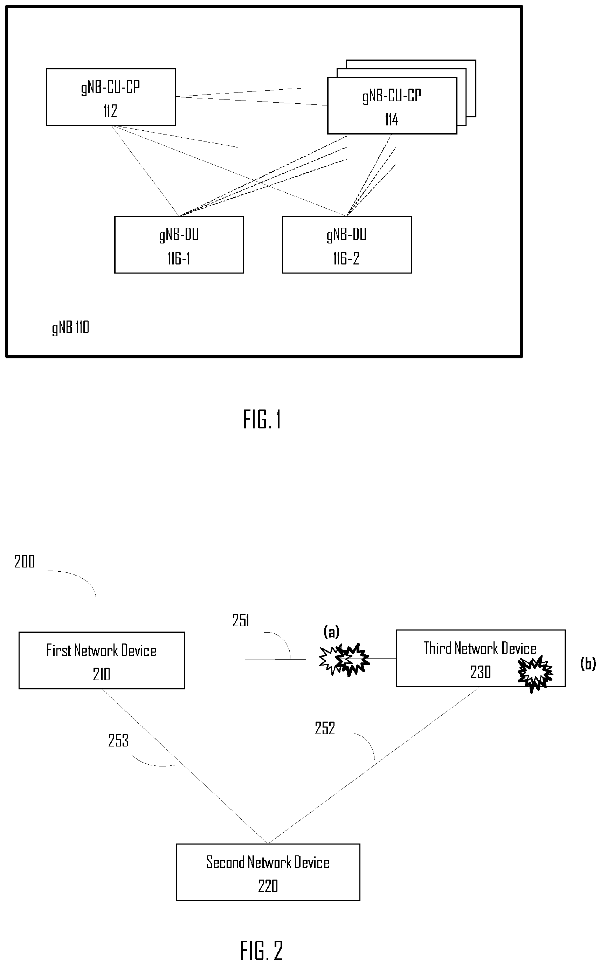

FIG. 1 illustrates an architecture in RAN illustrating a split architecture for a next generation Node-B (gNB) 110 with which some example embodiments of the present disclosure can be implemented. It would be appreciated that the gNB 110 is shown as an example, and the split architecture may also be applied to other base stations like eNB, ng-eNB, a beyond 5G base station, a 6G base station or a future base station.

As shown in FIG. 1, the gNB 110 is a node providing NR user plane and control plane protocol terminations towards the UE, it may comprise a gNB-CU and one or more gNB-DU(s) 116 (two gNB-DUs 116-1, 116-2 are illustrated as an example). gNB-CU is a logical node hosting Radio Connection Control (RRC), Service Data Adaptation Protocol (SDAP) and Packet Data Convergence Protocol (PDCP) protocols of the gNB or RRC and PDCP protocols of the en-gNB. gNB-CU controls the operation of one or more gNB-DUs 116. gNB-DU 116 is a logical node hosting Radio Link Control (RLC), Medium Access Control (MAC) and physical layers of the gNB or en-gNB, and its operation is partly controlled by gNB-CU. A gNB-CU and a gNB-DU 116 is connected via F1 interface.

A gNB-CU may comprise a gNB-CU-CP 112 and one or more gNB-CU-UP 114. A gNB-CU-CP 112 is a logical node hosting the RRC and the control plane part of the PDCP protocol of the gNB-CU for an en-gNB or a gNB. gNB-CU-UP 114 hosts the user plane part of the PDCP protocol of the gNB-CU for an en-gNB, and the user plane part of the PDCP protocol and the SDAP protocol of the gNB-CU for a gNB. A gNB-CU-CP 112 is connected to the gNB-DU 116 via F1 Control plane (F1-C) interface, a gNB-CU-UP 114 is connected to a gNB-DU through the F1 User plane (F1-U) interface and a gNB-CU-UP 114 is connected to a gNB-CU-CP 112 through the E1 interface.

Each network node in NG-RAN has transport network connection with other network node in the NG-RAN. The transport network layer (TNL) is based on IP transport, comprising Stream Control Transmission Protocol (SCTP) on top of IP and provides services for user plane transport, signalling transport. For example, the transport network layer provides service for F1-U, F1-C and E1 interfaces.

NG-RAN failures may be categorized as
- Failure in a network node (failure in gNB-CU-CP/gNB-CU-UP/gNB-DU), which may refer to a node failure. Such failure may affect the functions in the network node, therefore, a failure in a network node would impact all UEs served by the network node resulting in those UEs being out of service for potentially long periods of time.
- Transport layer failure of interface, e.g. the transport layer failure of the interface between the network nodes. The transport layer failure of interface may be caused by the malfunction of transport layer. The transport layer of interface may be recovered by substituting the transport layer without affecting the network node.

Among the two broad categories of failures listed above, a transport layer failure of interface, for example, the transport layer of E1 interface or F1 interface, can be recovered in a short period from a transport layer failure, whereas a node takes relatively much longer to recover from a node failure. Ideally, the actions taken by the peer network node when it detects the error should be different based on the failure type.

In case of a node failure, the contexts of the UEs served by the network node could be likely affected and experience user service interruption. A peer network node would do bulk clean up of UE contexts in all the other relevant interfaces, for example using the relevant RESET procedure and clear its own UE resources locally. This leads to all the impacted UEs being released from the NG-RAN. However, in case of transport layer failure, the peer network node may wait for the transport layer to recover on its own in a short period without releasing those.

Regardless of a node failure or transport layer failure, the symptom may be the same at the peer network node. The transport layer failure is usually an SCTP association failure that may be detected by the peer network node. The detection mechanism is described in RFC4960. It relies on loss of DATA chunk or HEARTBEAT SCTP chunks. When a HEARTBEAT or DATA chunk sent to remote transport address is not acknowledged within a configurable time, failure counts will be incremented. If failure count exceeds configurable threshold, the peer endpoint of the SCTP connection is considered as unreachable.

If the SCTP association recovers from a failure before a maximum failure count, for example, the configurable threshold, then system recovers on its own. However, if the SCTP association failure is longer, then there is no way the remote end (e.g. the peer network node) can differentiate between a node failure and transport layer failure. Therefore, regardless of node failure or transport layer failure, the symptom is the same at the peer network node, and there is no defined way for a peer network node to differentiate between the two.

It is to be understood that the architecture 110 shown in FIG. 1 is for the purpose of illustration without necessarily suggesting any limitation as to the scope of the disclosure. The number of network devices and their connection relationships, structures and types as shown in FIG. 1 are only for the purpose of illustration without suggesting any limitation. The architecture 110 may include any other type of network device, any other type of interfaces between the network devices and any suitable number of network devices adapted for implementing embodiments of the present disclosure.

FIG. 2 shows an example radio access network 200 in which embodiments of the present disclosure can be implemented. The communication network 200 may comprise a first network device 210, second network device 220, and a third network device 230. The first network device 210 communicates with the third network device 230 via a first interface 251, the second network device 220 communicates with the third network device 230 via a second interface 252, and the first network device 210 communicates with the second network device 220 via a third interface 253.

In some example embodiments, there are other interfaces and other network devices combinations with which some example embodiments of the present disclosure can be implemented. In an example, the first network device 210, the second network device 220 and the third network device 230 may be implemented as any network device of a gNB-CU-CP, gNB-CU-UP or gNB-DU. The first interface 251, the second interface 252 and the third interface 253 may be any interface of a E1 interface, a F1-U interface or a F1-C interface. So, for example, the first network device 210 may be one of gNB-CU-CP, gNB-CU-UP and gNB-DU; the second network device 220 may be a different one of gNB-CU-CP, gNB-CU-UP and gNB-DU; and the third network device 230 may be a different one of gNB-CU-CP, gNB-CU-UP and gNB-DU. Similar logic applies to the different interfaces, mainly E1, F1-U, and F1-C.

In another example, the first network device 210, the second network device 220 and the third network device 230 may be implemented as a first Master Node (MN), a second MN and a Secondary Node (SN) supporting Dual Connectivity (DC) or Multi-Radio Dual Connectivity (MR-DC), the first MN and the second MN both connect to the SN and share the SN. In such embodiments, for example, the first network device 210 may be implemented as a first MN. The second network device 220 may be implemented as the second MN, and the third network device 230 may be implemented as the SN. In such embodiments, for example, the first interface 251 is Xn between the first MN and the SN, the second interface 252 is the Xn interface between the second MN and SN, and the third interface 253 is the Xn interface between the first MN and the second MN.

In another example, the first network device 210 and the third network device 230 may be implemented as E2 node in ORAN architecture, E2 node may be any one of a gNB-CU-CP, gNB-CU-UP or gNB-DU. The second network device 220 may be implemented as Near-RT RIC in ORAN architecture. The first interface 251 may be any interface of a E1 interface, a F1-U interface or a F1-C interface, the second interface 252 and the third interface 253 may be a E2 interface.

As seen from FIG.2, the third network device 230 becomes unresponsive for the first network device 210. For example, there is error of communication over the first interface 251 between the first network device 210 and the third network device 230. The error may be caused by different types of failures. Two examples of such failures may be:
- a) a transport layer failure of or at the first interface 251
- b) a failure in or at the third network device 230

The third network node 230 takes longer time to recover from the failure in the third network node 230, and hence RESET may not be avoided. For example, the third network node 230 may initiate the RESET procedure in all of the interfaces of the third network node 230 (for example, the second interface 252) and lead to bulk clean-up of UE contexts. On the contrary, the transport layer of the first interface 251 can be recovered from the transport layer failure in a relatively short time period (i.e. at least shorter time period than in the case that the failure is at the third network device 230) and RESET can be avoided, thus the bulk release of UEs is not needed.

When detecting an error of communication over the first interface 251 (for example, detecting that the third network device 230 is unresponsive), the first network node 210 may not be able to determine whether the error of communication over the first interface 251 is caused by a failure in the third network node 230 or is caused by the transport layer failure of the first interface 251. Misinterpretation of the failure may cause the first network device 210 to take incorrect action and take longer time to recover from the failure. For example, performing RESET when the error of communication is caused by transport layer failure of the first interface 251 may lead to unnecessary delay.

The time for detecting the transport layer failure, which depends on the count of the failure and the wait period per failure, can run into several hours at the maximum. During this period, the remote network node, for example, the first network device 210 is blind/clueless on if it is a node failure or a transport layer failure. This leads to timeouts in the RAN during which time, the UE resources are still hanging, preventing other UEs from being admitted.

In addition, it is to be noted that there is no UE retention functionality defined in E1 or F1 interface (unlike in NG interface between an NG-RAN node with the 5G core network (CN) or S1 interface between an E-UTRAN node and the evolved packet core (EPC)). So, any solution that helps with unwanted or unnecessary UE removal or context release may be beneficial.

Therefore, to enable the first network device 210 to take the appropriate action upon and/or based on detection of an error of the communication over the first interface 251, a solution that helps in differentiating between the two types of failures (a node failure and a transport layer failure of interface) may be provided.

It is to be understood that the environment 200 shown in FIG. 2 should be understood for the purpose of illustration without necessarily suggesting any limitation as to the scope of the disclosure.

It is to be understood that the number of network devices and their connection relationships, structures and types as shown in FIG. 2 are only for the purpose of illustration without necessarily suggesting any limitation. The environment 200 may include any suitable number of network devices adapted for implementing embodiments of the present disclosure.

Principle and embodiments of the present disclosure will be described in detail below with reference to the accompanying drawings.

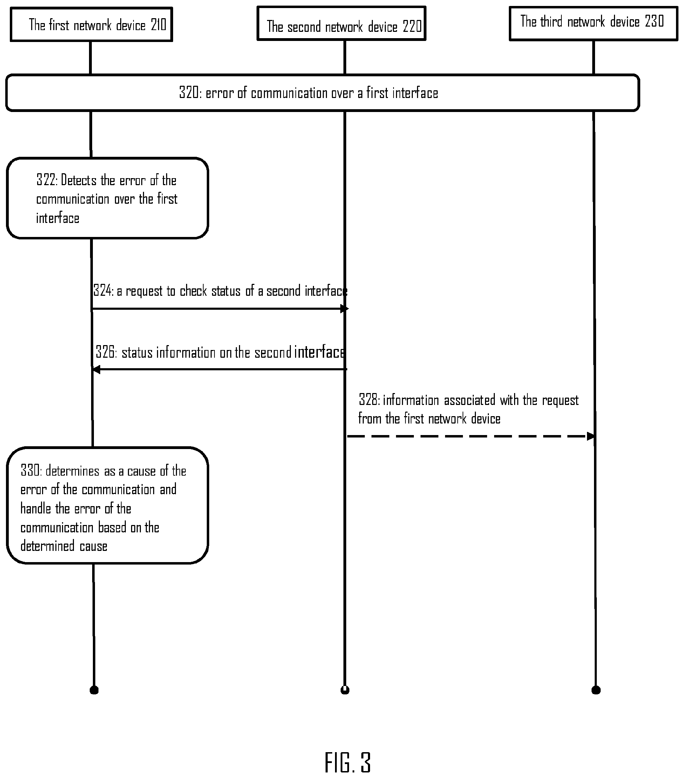

FIG. 3 illustrates a signaling flow 300 between the network devices in the communication network according to some example embodiments of the present disclosure. For the purpose of discussion, the signaling flow 300 will be described with reference to FIG. 2.

As shown in FIG. 3, the first network device 210 communicates with the third network device 230 via the first interface 251, the second network device 220 communicates with the third network device 230 via the second interface 252, and the first device 210 communicates with the second device via the third interface 253.

At 320, a failure of communication over the first interface 251 happens. The first network device 210 detects the failure at 322. For example, the detection of step 322 may be based on detecting an error of communication over the first interface 251.

In some example embodiments, the first network device 210 may detect the error of the communication over the first interface 251 based on not receiving, from the third network device 230, a response message to a message transmitted by the first network device 210 to the third network device 230 over the first interface 251. In one example, the first network device 210 may detect the failure on time supervision expiry, i.e., an expected response to a message transmitted by the first network device 210 is not received within a time period. The first network device 210 may start a timer after sending a message, after expiration of the timer, if no response message is received, the first network device 210 may detect there is an error of communication over the first interface 251. Thus, based on not receiving the response message from the third network device 230 within a certain time period (e.g. before timer expires), the first network device 210 may determine and/or detect error of communication over the first interface 251.

In some example embodiments, the first network device 210 may detect the error of the communication based on a failure of a transport layer of the first interface 251. In one example, the transport layer of the first interface 251 maybe a SCTP layer. The endpoint of the SCTP layer of the first interface 251 in the first network device 210 may keep a counter on the total number of consecutive retransmissions to the end point of the SCTP layer of the first interface 251 in the third network device 230, including unacknowledged HEARTBEAT chunks. Based on the value of the counter exceeding a parameter of 'Association.Max.Retrans', the end point of the SCTP layer of the first interface 251 in the first network device 210 may consider or determine the endpoint of the SCTP layer of the first interface 251 in the third network device 230 unreachable. In addition, the endpoint of the SCTP layer of the first interface 251 in the first network device 210 may report the failure to the upper layer, in this way, the first network device 210 may detect the error of the communication over the first interface 251.

The first network device 210 transmits to the second network device 220 a request 324 for the second network device 220 to check status of a second interface 252 between the second network device 220 and the third network device 230. In one example, the first network device 210 may initiate a procedure over the third interface 253 to enquire the second network device 220 about the status of the second interface 252. The procedure may be a Status Check procedure over the third interface 253. The request 324 may be sent using a message over the third interface 253 to request the second network device 220 to check the status of the second interface 252. In one example, the request 324 may be sent using a request message over the third interface 253 to request the second network device 220 to check the status of the second interface 252The request message may be a status check message over the third interface 253. Alternatively, the request 324 may be sent using a message over the third interface 253 with information elements to request the second network device 220 to check the status of the second interface 252. For example, the request 324 may be transmitted based on detecting the error of communication in step 322.

The second network device 220 receives from the first network device 210 via the interface between the first network device 210 and the second network device 220, a request 324 for the second network device 220 to check status of a different interface between the second network device 220 and a third network device 230. The interface between the first network device 210 and the second network device 220 may refer to the third interface 253 and the different interface may refer to the second interface 252.

In some example embodiments, the second network device 220 may check the status of the second interface 252 based on determining whether communication over the second interface 252 is successful. In one example, the second network device 220 may check the status of the second interface 252 based on determining whether it received a response message to a message transmitted to the third network device 230 over the second interface 252. For example, the second network device 220 may transmit the message to the third network device 230 to check the status of the second interface 252. Based on receiving a response to the transmitted message, the second network device 220 may determine that the second interface 252 is operational (i.e. is working). Based on not receiving a response to the transmitted message, the second network device 220 may determine that the second interface 252 is non-operational (i.e. is not working).

Alternatively or additionally, the second network device 220 may check the status of the second interface 252 by enquiring status information from another second network device over an interface between the second network device 220 and the another second network device. The another second network device may have another second interface (i.e. meaning similar or same type of interface) with the third network device 230, and the second network device 220 may request the another second network device to check the status of the another second interface between the another second network device and the third network device 230. The another second network device may transmit the status information on the another second interface to the second network device 220 as a response to the request.

The second network device 220 transmits the status information 326 on the second interface 252 to the first network device 210 over the third interface 253. In an example, the status information 326 on the second interface 252 may be transmitted in a message over the third interface 253 indicating the status of the second interface 252. The message may be a status check response message indicating the status of the second interface 252. Alternatively, the status information 326 on the second interface 252 may be transmitted using existing message over the third interface 253. For example, the message may be a Status Indication message or a Resource Status Reporting message with information elements to indicate the status of the second interface 252.

In some embodiments, if the second network device 220 receives the status information of the another second interface from the another second network device, the second network device may transmit the status of the another second interface in the same message with the status of the second interface or in a separate message. Alternatively, the second network device 220 may combine the status of the another second interface and the status of the second interface 252 to create status information 326 on the second interface 252, and transmit the status information 326 on the second interface 252 to the first network device 210.

In some embodiments, the status information 326 on the second interface 252 may indicate whether the second interface 252 is operational or not. As an example, if the communication over the second interface 252 is successful, that the second network device 220 performs the reception and transmission of packets or messages or signals over the second interface 252 successfully, the status information 326 on the second interface 252 may indicate that the second interface 252 is operational (i.e. is working). As another example, if the second network device 220 fails to get response from the third network device 230 in response to a message transmitted to the third network device 230 over the second interface 252, the status information 326 on the second interface 252 may indicate that the second interface 252 is non-operational (i.e. is not working).

In some example embodiments, when the status information 326 on the second interface 252 indicates the second interface is operational, the second network device 220 may transmit, to the third network device 230, information 328 associated with the request from the first network device 210. In an example, when the second network device 220 determines that the third network device 230 is operational/working (i.e. the communication over the second interface 252 is successful) the second network device 220 may transmit to the third network device 230 information 328 to indicate that the first network device 210 has enquired about the status of the second interface 252. If the third network device 230 also detects an error of the communication over the first interface 251, the information 328 associated with the request from the first network device 210 may indicate to the third network device 230 that the first network device 210 is functional, and the cause of the error may be the transport layer failure of the first interface 251. By knowing the cause of the error is the transport layer failure of the first interface 251, the third network device 230 may not initiate a local release of all its resources.

The first network device 210 receives the status information 326 on the second interface 252.

In some example embodiments, at 330, the first network device 210 may determine as a cause of the error of the communication based on the received status information 326 on the second interface 252, and handle the error of the communication based on the determined cause of the error. According to the determined cause of the error, the first network device 210 may take different actions regarding the detected error. For example, based on determining transport layer failure as the cause of the error, the first network device 210 may initiate a first action. Based on determining failure at the third network node 230 as the cause of the error, the first network device 210 may initiate a second action, wherein the first and second actions may be different to each other as described herein.

In some example embodiments, the first network device 210 may determine a transport layer failure of the first interface 251 as the cause of the error. As an example, the transport layer failure may result from cable break in the transport lines, as another example, the transport layer may result from incorrect configuration, or other failures occurred in the end point of the transport layer. The transport layer may be recovered from the transport layer failure by replacing the broken cable, reconfiguring the parameters for the transport layer.

In some example embodiments, the first network device 210 may determine a failure in the third network device 230 as the cause of the error. In an example, the failure in the third network device 230 may be a software failure or a hardware failure in the third network device 230. As another example, the failure in the third network device 230 may be that the third device itself was destroyed. Such failure in the third network device 230 may be recovered by replacing the hardware of the third network device 230, upgrading the software of the third network device 230, which may take longer time.

In some example embodiments, based on the status information 326 indicating the second interface 252 is operational, the first network device 210 may determine the transport layer failure of the first interface 251 as the error of the communication. If the second interface 252 is operational, in an example, the third network device 230 communicates with the second network device 220 successfully, the first network device 210 may consider or determine that there is no failure in the third network device 230, but only transport layer failure in the first interface 251.

In some example embodiments, based on the status information 326 indicating that the second interface 252 is non-operational, the first network device 210 may determine the failure in the third network device 230 as the cause of the error of the communication. If the second interface 252 is non-operational, for example, the second network device 220 didn't get a response in response to a message transmitted to the third network device 230 over the second interface 252 during a time period, the first network device 210 may consider or determine that the third network device 230 has suffered a failure and there is a failure in the third network device 230.

In one example, the network resiliency may be supported that a network device may be configured as an active network device with one or more standby network devices. The active network device may provide service to the terminal devices and the standby network device may refer to a backup network device. The backup network device may be activated and take over the role of the active network device when the active network device encounters failure.

In some example embodiments, when the first network device 210 determines the failure in the third network device 230 as the cause of the error, the first network device 210 may handle the error by setting up another first interface with the another third network device and release the first interface 251 with the third network device 230. For example, third network device 230 may act as an active third network device and it may be configured with another third network device as a backup third network device. The backup third network device may store the context of the terminal devices served by the third network device 230, and update the context of the terminal devices served by the third network device 230 regularly from the third network device 230 so that the backup third network device always stores the latest context of the terminal devices served by the third network device 230. The first network device 210 may set up another first interface with the backup third network device. The first network device 210 may set up the another first interface using a SETUP procedure. During the SETUP procedure, the first network device 210 may inform the another third network device to start acting as the active third device with the stored context of the terminal devices served by the third network device 230.

As another example, the first network device 210 may already have another first interface with the backup third network device. The first network device 210 may not set up the another third network device but inform the backup third network device to start acting as the active third network device with the stored context of the terminal devices served by the third network device 230.

After the backup third network device acts as the active third network device, the terminal devices served by the third network device 230 may be relocated to the backup third network device. The active bearers of the terminal devices may be moved to the backup third network device, therefore the backup third network device may provide service to those terminal devices without releasing the bearers for those terminal devices.

After the terminal devices served by the third network device 230 are relocated to the backup third network device, the first network device 210 may release the first interface 251 with the third network device 230. Alternatively, the first network device 210 may release the first interface 251 before informing the another third network device or the backup third network device to start acting as the active third network device. The first network device 210 may initiate a RELEASE procedure to release all existing signalling connections and related application level data of the first interface 251 with the third network device 230.

In some example embodiments, when the first network device 210 determines the failure in the third network device 230 as the cause of the error, and another third network device is unavailable as a backup, the first network device 210 may handle the error by initiating reset procedures for other interfaces of the first network device 210; and releasing context of one or more terminal devices stored in the first network device 210. In one example, the network resiliency may not be supported that the third network device 230 is not configured with the backup third network device, the first network device 210 may initiate a RESET procedure for other interfaces of the first network devices 210. Other interfaces may exclude the first interface 251, for example, other interfaces may include the second interface 252 and the third interface 253. By the RESET procedure, the first network device 210 may re-initialize the contexts of the terminal devices related to the second interface 252 and the third interface 253. Additionally, the first network device 210 may also reset the context of the terminal devices locally.

In some example embodiments, when or in case the first network device 210 determines transport layer failure of the first interface 251 as the cause of the error, it may determine whether a transport layer of the first interface 251 is recovered during a time period.

In some example embodiments, the first network device 210 may determine whether the transport layer of the first interface 251 is recovered by receiving from the third network device 230, a response message in response to a message transmitted to the third network device 230 over the first interface 251. In an example, if the first network device 210 receives a response message after transmitting to the third network device 230 a message over the first interface 251, the first network device 210 may determine the failure of the transport layer is recovered. The response message could be an acknowledgement message, a response message or any other type of message as a response to the message transmitted to the third network device 230. The transmitted message and/or the response message may be UE-associated or non-UE-associated message.

In some example embodiments, the first network device 210 may determine whether the transport layer of the first interface 251 is recovered by receiving from the transport layer of the first interface 251, an indication indicating recovery of the transport layer. In one example, when the first network device 210 determines the error is caused by the transport layer failure of the first interface 251 but not a failure in the third network device 230, it may wait for an indication from the transport layer that the transport layer has recovered from the failure during a time period. For example, if the broken cable of the transport layer is replaced, or the correct configuration is applied for the transport layer, the transport layer may be functional again and indicate its status to the upper layer. If the first network devices 210 receives the indication indicating the recovery of the transport layer, it may consider the transport layer of the first interface 251 is recovered from the failure.

In some example embodiments, based on determining that the transport layer of the first interface 251 is not recovered during the time period, the first network device 210 may notify Operation, Administration and Maintenance (OAM) about the failure of the first interface 251. In one example, if the first network device 210 did not receive the indication of the recovery from the transport layer of the first interface 251 during the time period, it may consider the transport layer is not recovered from the failure and may raise notifications to OAM. In another example, if the first network device 210 did not receive a response to a message transmitted to the third network device 230 over the first interface 251, it may consider or determine that the failure of the transport layer is not recovered and may raise notifications to OAM. By notifying the OAM about the transport layer failure of the first interface 251, the OAM may raise warning regarding the error of the first interface 251 to ensure manual action for recovering the transport layer of the first interface 251 from failure.

Additionally or alternatively, in some example embodiments, based on determining that the transport layer of the first interface 251 is not recovered during the time period, the first network device 210 may initiate reset procedures for other interfaces of the first network device 210 and release context of the terminal devices stored in the first network device 210. Other interfaces may exclude the first interface 251. In one example, the first network device 210 may initiate a RESET procedure for other interfaces of the first network devices 210. Other interfaces may include the second interface 252 and the third interface 253. By the RESET procedure, the first network device 210 may re-initialize the contexts of the terminal devices related to the second interface 252 and the third interface 253. Additionally, the first network device 210 may also reset the context of the terminal devices locally.

In some embodiments, the first network device 210 may pause the operations for the terminal devices served by the first network device 210 based on detecting the error of communication over the first interface 251. For example, when the first network device 210 detects the error of the communication over the first interface 251, it may pause the ongoing procedures for the terminal devices served by the first network device 210. Based on determining that the transport layer of the first interface 251 is recovered during the time period, the first network device 210 may keep context of the terminal devices stored in the first network device 210; and resume operations for the terminal devices. In one example, if the first network device 210 is indicated about the recovery of the transport layer of the first interface 251, it may not initiate the RESET procedure of the second interface 252 and the third interface 253, and keep the stored context of the terminal devices. The first network device 210 may resume the paused operations, for example, the first network device 210 may resume the paused procedures for the terminal devices after the transport layer is recovered from the failure during the time period.

In some example embodiments, the time period is a preconfigured value.

In some example embodiments, there may be a set of entity instances of the third network device 230 (for example a group of the third network devices deployed in a cloud environment). If the error of the communication is detected in the first interface 251 between the first network device 210 and one instance of the third network device 230, the first network device 210 may consider or determine that the error of the communication of the first interface 251 is caused by the failure of the transport layer of the first interface 251 between the first network device 210 and the one instance of the third network device 253. If the error of the communication is detected in all the first interfaces 251 between the first network device 210 and all the instances of the third network device 230, the first network device 210 may consider or determine that the error of the communication is caused by a failure in the cloud environment where the group of the third network devices 230 are deployed. In this case, the first network device 210 may not wait for the recovery of the transport layer of the first interfaces 251 and take the action to handle the error of the communication. In one example, the failure in the cloud environment may be detected by the first network device 210. Alternatively or additionally, if the second network device 220 also connects to the group of the third network devices 230, the first network device 210 may receive status information 326 on the second interface 252 indicating the status on the second interfaces 252 between the second network device 220 and all the instances of the third network devices 230.

It is to be understood that the number of devices and their connection relationships, structures and types as shown in FIG. 2 and FIG. 3 are only for the purpose of illustration without suggesting any limitation. The environment 200 and the signal flow 300 may include any suitable number of devices adapted for implementing embodiments of the present disclosure.

In some example embodiments, the various type of the failures and the recommended solution may be captured in the table 1 below

**TABLE 1**

| **Scenario ID** | **FAILURE DETECTED BY** | **FAILURE DETECTED ON** | **NEW QUERY DONE TOWARDS** | **ACTION ON NODE FAILURE** | **ACTION ON TRANSPORT LAYER FAILURE OF THE INTERFACE** |
|---|---|---|---|---|---|
| 1 | gNB-CU-CP | E1 | gNB-DU | [gNB-CU-UP Failure] If other gNB-CU-UP is available, gNB-CU-CP may try to relocate the affected UEs there | [E1 Failure] Wait for E1 recovery |
| | | | | Else, start Reset on all interfaces except E1 + local release | |
| 2 | gNB-CU-CP | F1-C | gNB-CU-UP | [gNB-DU Failure] If other gNB-DU available, gNB-CU-CP may try to relocate the affected UEs there | [F1-C Failure] Wait for F1-C recovery |
| | | | | Else, start Reset on all interfaces except F1-C + local release | |
| 3 | gNB-DU | F1-C | gNB-CU-UP | [gNB-CU-CP Failure] Contact the backup gNB-CU-CP as per the Nokia resiliency solution (or) Local release of UEs | [F1-C Failure] Wait for F1-C recovery |
| 4 | gNB-DU | F1-U | gNB-CU-CP | [gNB-CU-UP Failure] If other gNB-CU-UP is available, gNB-CU-CP may try to relocate the affected UEs there | [F1-U Failure] Wait for F1-U recovery |
| | | | | Else, start Reset on all interfaces except F1-U + local release | |
| 5 | gNB-CU-UP | E1 | gNB-DU | [gNB-CU-CP Failure] Contact the backup gNB-CU-CP as per the Nokia resiliency solution (or) Local release of UEs | [E1 Failure] Wait for E1 recovery |
| 6 | gNB-CU-UP | F1-U | gNB-CU-CP | [DU Failure] If other gNB-DU available, gNB-CU-CP may try to relocate the affected UEs there | [F1-U Failure] Wait for F1-U recovery |
| | | | | Else, start Reset on all interfaces except F1-U + local release | |
| 7 | E2 Node (could be gNB-CU-CP, gNB-CU-UP or gNB-DU) | E1 or F1 | Near-RT RIC | [E2 Node Failure] Attempt to move impacted UEs to a different node instance or else start Reset of all interfaces excepting the one with the failed node + local release | Wait for recovery |
| 8 | MN-1 | Xn | MN-2 | [SN Failure] Attempt to move the impacted UEs to a different SN if possible, else release the secondary connection | Wait for recovery |

In one example, for the scenario 1 in the table, the first network device 210 may be implemented as a gNB-CU-CP for the NG-RAN. The second network device 220 may be implemented as a gNB-DU for the NG-RAN, and the third network device 230 may be implemented as a gNB-CU-UP for the radio access network. In such embodiments, for example, the first interface 251 is the E1 interface between the gNB-CU-CP and gNB-CU-UP, the second interface 252 is the F1-U interface between the gNB-CU-UP and gNB-DU, and the third interface 253 is the F1-C interface between the gNB-CU-CP and gNB-DU.

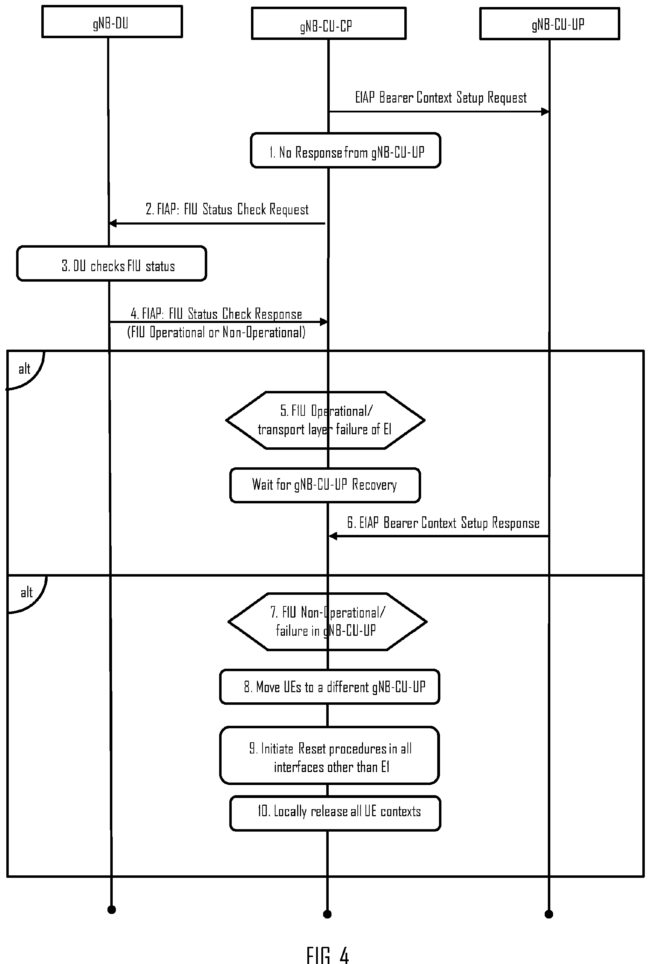

FIG. 4 illustrates a signaling flow of the handling of the error of the communication over the E1 interface for scenario 1. At step 1, gNB-CU-CP doesn't get response for a given E1 message and a timer expires. For illustration purpose, for example, gNB-CU-CP does not get a E1AP Bearer Context Setup Response message as a response for E1AP Bearer Context Setup Request message transmitted to gNB-CU-UP. Alternatively or additionally, it detects a problem at the SCTP level (DATA chunk or HEARTBEAT SCTP chunks). At step 2, gNB-CU-CP initiates a Status Check procedure by sending a F1AP Status Check Request message requesting gNB-DU to check the status of F1-U interface to the unresponsive gNB-CU-UP. Alternatively, gNB-CU-CP may send a F1AP Resource Status Request message requesting gNB-DU to check the status of F1-U interface to the unresponsive gNB-CU-UP. At steps 3-4, gNB-DU checks the status of F1-U interface and provides the status information on F1-U in the response F1AP Status Check Response message. Alternatively, gNB-DU may provide the status information on F1-U in a F1AP Resource Status Update message or a F1AP GNB-DU Status Indication message. At step 5, in the case where F1-U is operational, gNB-CU-CP considers that there is no node failure in gNB-CU-UP, but only transport layer failure (for example, SCTP failure) in the E1 interface. It would just wait for the response from the gNB-CU-UP or in general, indication from the SCTP layer that the transport layer has recovered. It should be noted if the gNB-CU-UP is operational and only the transport layer failure of E1 interface occurs, the gNB-CU-UP may also detect the transport layer failure of the E1 interface. It may then take a local action of clearing all the UEs and bearers. To prevent this, the gNB-DU may indicate the gNB-CU-UP that gNB-CU-CP is operational, so the gNB-CU-UP could keep the UEs active. At step 7, in the case where F1-U is non-operational, gNB-CU-CP considers that there is node failure in gNB-CU-UP and takes corrective action. At step 8: If there is another gNB-CU-UP available as backup where the impacted UEs' bearers could be moved, gNB-CU-CP moves the bearers of the UEs to the backup gNB-CU-UP. This could prevent a mass UE release. At steps 9-10, if there is no other such gNB-CU-UP available as a backup, then the gNB-CU-CP initiates RESET procedures in all the relevant interfaces other that E1 to release the UE resources. It then locally releases the UE contexts too.

It should be understood that the Status Check procedure or a procedure performing similar function may be initiated in different interface by different network device for different scenario.

For scenario 2, the first network device 210 may be implemented as a gNB-CU-CP for the NG-RAN, the second network device 220 may be implemented as a gNB-CU-UP for the NG-RAN, and the third network device 230 may be implemented as a gNB-DU for the NG-RAN. The first interface 251 may be the F1-C interface between the gNB-CU-CP and gNB-DU, the second interface 252 may be the F1-U interface between the gNB-CU-UP and gNB-DU, and the third interface 253 may be the E1 interface between the gNB-CU-CP and gNB-CU-UP. A Status Check procedure or other procedure over E1 interface may be initiated by gNB-CU-CP to request gNB-CU-UP to check status of F1-U interface.

For scenario 3, the first network device 210 may be implemented as a gNB-DU for the NG-RAN, the second network device 220 may be implemented as a gNB-CU-UP for the NG-RAN, and the third network device 230 may be implemented as a gNB-CU-CP for the NG-RAN. The first interface 251 may be the F1-C interface between the gNB-CU-CP and gNB-DU, the second interface 252 may be the E1 interface between the gNB-CU-CP and gNB-CU-UP, and the third interface 253 may be the F1-U interface between the gNB-CU-UP and gNB-DU. A Status Check procedure over F1-U interface or other F1-U procedure may be initiated by gNB-DU to request gNB-CU-UP to check status of E1 interface.

For scenario 4, the first network device 210 may be implemented as a gNB-DU for the NG-RAN, the second network device 220 may be implemented as a gNB-CU-CP for the NG-RAN, and the third network device 230 may be implemented as a gNB-CU-UP for the NG-RAN. The first interface 251 may be the F1-U interface between the gNB-DU and gNB-CU-UP, the second interface 252 may be the E1 interface between the gNB-CU-UP and gNB-CU-CP, and the third interface 253 may be the F1-C interface between the gNB-DU and gNB-CU-CP. A Status Check procedure or other procedure over F1 interface may be initiated by gNB-DU to request gNB-CU-CP to check status of E1 interface.

For scenario 5, the first network device 210 may be implemented as a gNB-CU-UP for the NG-RAN, the second network device 220 may be implemented as a gNB-DU for the NG-RAN, and the third network device 230 may be implemented as a gNB-CU-CP for the NG-RAN. The first interface 251 may be the E1 interface between the gNB-CU-CP and gNB-CU-UP, the second interface 252 may be the F1-C interface between the gNB-CU-CP and gNB-DU, and the third interface 253 may be the F1-U interface between the gNB-CU-UP and gNB-DU. A Status Check procedure over F1-U interface or other F1-U procedure may be initiated by gNB-CU-UP to request gNB-DU to check status of F1-C interface.

For scenario 6, the first network device 210 may be implemented as a gNB-CU-UP for the NG-RAN, the second network device 220 may be implemented as a gNB-CU-CP for the NG-RAN, and the third network device 230 may be implemented as a gNB-DU for the NG-RAN. The first interface 251 may be the F1-U interface between the gNB-CU-UP and gNB-DU, the second interface 252 may be the F1-C interface between the gNB-CU-CP and gNB-DU, and the third interface 253 may be the E1 interface between the gNB-CU-CP and gNB-CU-UP. A Status Check procedure or other procedure over E1 interface may be initiated by gNB-CU-UP to request gNB-CU-CP to check status of F1-C interface.

For scenario 7, the first network device 210 may be one of gNB-CU-CP, gNB-CU-UP and gNB-DU, the second network device 220 may be a Near-RT RIC and the third network device 230 may be a different one of gNB-CU-CP, gNB-CU-UP and gNB-DU. The first interface 251 may be the E1 interface or the F1 interface, the second interface 252 may be the E2 interface, and the third interface 253 may be a different E2 interface. The first network device 210, i.e. the detecting node may initiate a Status Check procedure or other procedure over E2 interface between the detecting node and the Near-RT RIC to request the Near-RT RIC to check the status of the different E2 link between the Near-RT RIC and the unresponsive node.

For scenario 8, two MNs may share a common SN and one MN may detect that the SN in unresponsive. So, the first network device 210 may be implemented as a first MN, the second network device 220 may be implemented as a second MN, and the third network device 230 may be implemented as the SN. The first interface 251 may be the Xn between the first MN and the SN, the second interface 252 may be the Xn interface between the second MN and the SN, and the third interface 253 may be the Xn interface between the first MN and the second MN. The first MN may query the second MN to check the status of the Xn interface between the second MN and the SN using a Status Check procedure or other procedure over the Xn interface between the first MN and the second MN.

When a network device detects an error of communication over an interface with another network device, with the Status Check procedure towards the other network device which have interface with both the network device and another network device, for example, by requesting from the other network device about status of the interface between the other network device and another network device, the network device may determine the type of the failure which causes the error of the communication over the interface with another network device, for example, the network device may distinguish between the node failure in another network device and the transport layer failure of the interface. With the determined type of the failure, the network device may take proper actions to handle the error to avoid unnecessary or undesirable releasing of the context of the terminal devices, and therefore will improve the overall user experience.

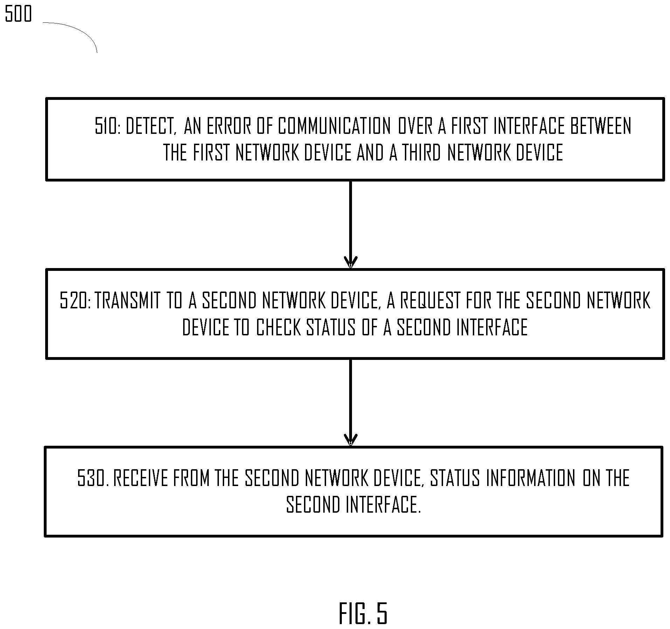

FIG. 5 illustrates a flowchart 500 of a method implemented at a first network device for a radio access network according to some embodiments of the present disclosure. For the purpose of discussion, the method 500 will be described from the perspective of the first network device 210 with reference to FIG. 2.

At block 510, the first network device 210 detects an error of communication over a first interface 251 between the first network device 210 and a third network device 230. At block 520, the first network device 210 transmits to a second network device 220 of the radio access network, a request for the second network device 220 to check status of a second interface 252 between the second network device 220 and the third network device 230. At 530, the first network device 210 receives from the second network device 220, status information on the second interface 252.

In some example embodiments, the status information may indicate the second interface is operational or the second interface is non-operational.

In some example embodiments, the first network device 210 may further determine as a cause of the error of the communication based on the status information; and handle the error of the communication based on the determined cause of the error.

In some example embodiments, the cause of the error may be a transport layer failure of the first interface 251 or a failure in the third network device 230.

In some example embodiments, the status information indicates the second interface 252 is operational, the first network device 210 may determine the transport network failure of the first interface 521 as the cause of the error of the communication.

In some example embodiments, the status information indicates the second interface 252 is non-operational, the first network device 210 may determine the failure in the third network device 230 as the cause of the error of the communication.

In some example embodiments, the cause of the error of the communication is the failure in the third network device 230 , and another third network device is available as a back-up, the first network device 210 may handle the error by setting up another first interface with the another third network device; and releasing the first interface 251 with the third network device 230.

In some example embodiments, the cause of the error of the communication is the failure of the third network device 230, and another third network device is unavailable as a back-up, the first network device 210 may handle the error of the communication by initiating reset procedures for other interfaces of the first network device 210, wherein the other interfaces exclude the first interface 251; and releasing context of one or more terminal devices stored in the first network device 210.

In some example embodiments, the first network device 210 may detect the error of the communication by detecting the error of communication over the first interface 251 based on not receiving, from the third network device 230, a response message to a message transmitted by the first network device 210 to the third network device 230 over the first interface 251.

In some example embodiments, the first network device 210 may detect the error of the communication by detecting the error based on a failure of a transport layer of the first interface 251.

In some example embodiments, the cause of the error of communication is the transport network failure of the first interface 251, the first network device 210 may further determine whether a transport layer of the first interface 251 is recovered during a time period.

In some example embodiments, based on determining that the transport layer of the first interface 251 is not recovered during the time period, the first network device 210 may notify Operation, Administration and Maintenance (OAM) about the failure of the first interface 251.

In some example embodiments, based on determining that the transport layer of the first interface 251 is not recovered during the time period, the first network device 210 may initiate reset procedures for other interfaces of the first network device 210, the other interfaces exclude the first interface 251; and release context of one or more terminal devices stored in the first network device 210.

In some example embodiments, based on determining that the transport layer of the first interface 251 is recovered during the time period, the first network device 210 may keep context of one or more terminal devices stored in the first network device 210; and resume operations for the one or more the terminal devices, the operations are paused based on detecting the error of the communication.

In some example embodiments, the first network device 210 may determine whether the transport layer of the first interface 251 is recovered by receiving from the third network device 230, a response message in response to a message transmitted to the third network device 230 over the first interface 251; or receiving from the transport layer of the first interface 251, an indication indicating recovery of the transport layer, or any combination of the listed items.

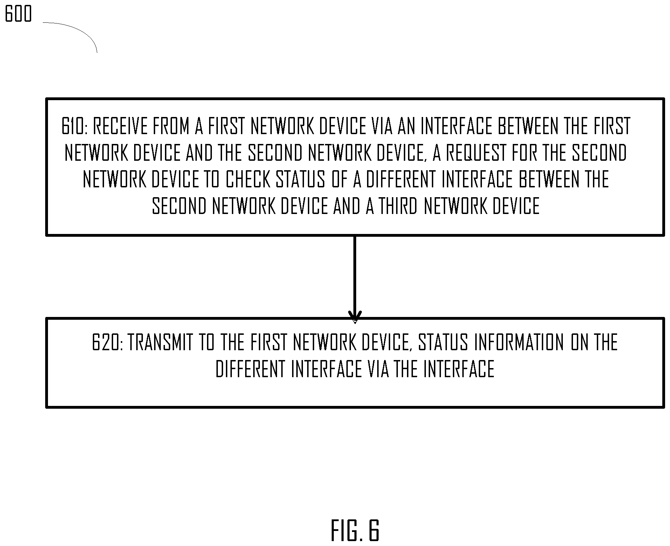

FIG. 6 illustrates a flowchart 600 of a method implemented at a second network device for a radio access network according to some embodiments of the present disclosure. For the purpose of discussion, the method 600 will be described from the perspective of the second network device 220 with reference to FIG. 2.

At block 610, the second network device 220 receives, from a first network device 210 of the radio access network, via an interface between the first network device 210 and the second network device 220, a request for the second network device 220 to check status of a different interface between the second network device 220 and a third network device 230 of the radio access network. At block 620 the second network device 220 transmits, to the first network device 210, status information on the different interface via the interface.

In some example embodiments, the status information may indicate the second interface is operational or the second interface is non-operational.

In some example embodiments, the status information indicates the different interface is operational, the second network device 220 may transmit, to the third network device 230, information associated with the request from the first network device 210.

In some example embodiments, an apparatus capable of performing the method 500 (for example, the first network device 210 for the radio access network) may comprise means for performing the respective steps of the method 500. The means may be implemented in any suitable form. For example, the means may be implemented in a circuitry or software module.

In some example embodiments, the apparatus comprises means for detecting, an error of communication over a first interface between the first network device and a third network device; means for transmitting to a second network device of the radio access network, a request for the second network device to check status of a second interface between the second network device and the third network device; and means for receiving, from the second network device, status information on the second interface.

In some example embodiments, the status information may indicate the second interface is operational or the second interface is non-operational.

In some example embodiments, the apparatus further comprises means for determining as a cause of the error of the communication based on the status information; and handle the error of the communication based on the determined cause of the error.

In some example embodiments, the cause of the error may be a transport layer failure of the first interface or a failure in the third network device.

In some example embodiments, the status information indicates the second interface is operational, the apparatus further comprise means for determining the transport network failure of the first interface as the cause of the error of the communication.

In some example embodiments, the status information indicates the second interface is non-operational, the apparatus further comprise means for determining the failure in the third network device as the cause of the error of the communication.

In some example embodiments, the cause of the error of the communication is the failure in the third network device, and another third network device is available as a back-up, the apparatus further comprise means for handling the error by setting up another first interface with the another third network device; and releasing the first interface with the third network device.

In some example embodiments, the cause of the error of the communication is the failure of the third network device, and another third network device is unavailable as a back-up, the apparatus further comprise means for handling the error of the communication by initiating reset procedures for other interfaces of the first network device, wherein the other interfaces exclude the first interface; and releasing context of one or more terminal devices stored in the first network device.

In some example embodiments, the apparatus further comprise means for detecting the error of the communication by detecting the error of communication over the first interface based on not receiving, from the third network device, a response message to a message transmitted by the first network device to the third network device 230 over the first interface.

In some example embodiments, the apparatus further comprise means for detecting the error of the communication by detecting the error based on a failure of a transport layer of the first interface.

In some example embodiments, the cause of the error of communication is the transport network failure of the first interface, the apparatus further comprise means for determining whether a transport layer of the first interface is recovered during a time period.

In some example embodiments, based on determining that the transport layer of the first interface is not recovered during the time period, the apparatus further comprise means for notifying Operation, Administration and Maintenance (OAM) about the failure of the first interface.

In some example embodiments, based on determining that the transport layer of the first interface is not recovered during the time period, the apparatus further comprise means for initiating reset procedures for other interfaces of the first network device, the other interfaces exclude the first interface; and means for releasing context of one or more terminal devices stored in the first network device.

In some example embodiments, based on determining that the transport layer of the first interface is recovered during the time period, the apparatus further comprise means for keeping context of one or more terminal devices stored in the first network device; and means for resuming operations for the one or more the terminal devices, the operations are paused based on detecting the error of the communication.

In some example embodiments, the apparatus further comprise means for determining whether the transport layer of the first interface is recovered by receiving from the third network device, a response message in response to a message transmitted to the third network device over the first interface; or receiving from the transport layer of the first interface, an indication indicating recovery of the transport layer, or any combination of the listed items.

In some embodiments, the apparatus further comprises means for performing other steps in some embodiments of the method 500. In some embodiments, the means comprises at least one processor and at least one memory including computer program code, the at least one memory and computer program code configured to, with the at least one processor, cause the performance of the apparatus.

In some example embodiments, an apparatus capable of performing the method 600 (for example, the second network device 220 for a radio access network) may comprise means for performing the respective steps of the method 600. The means may be implemented in any suitable form. For example, the means may be implemented in a circuitry or software module.

In some example embodiments, the apparatus comprises means for receiving, from a first network device of the radio access network, via an interface between the first network device and the second network device, a request for the second network device to check status of a different interface between the second network device and a third network device of the radio access network; and means for transmitting, to the first network device, status information on the different interface via the interface.

In some example embodiments, the status information may indicate the second interface is operational or the second interface is non-operational.

In some example embodiments, the status information indicates the different interface is operational, the apparatus further comprises means for transmit, to the third network device, information associated with the request from the first network device.

In some embodiments, the apparatus further comprises means for performing other steps in some embodiments of the method 600. In some embodiments, the means comprises at least one processor and at least one memory including computer program code, the at least one memory and computer program code configured to, with the at least one processor, cause the performance of the apparatus.

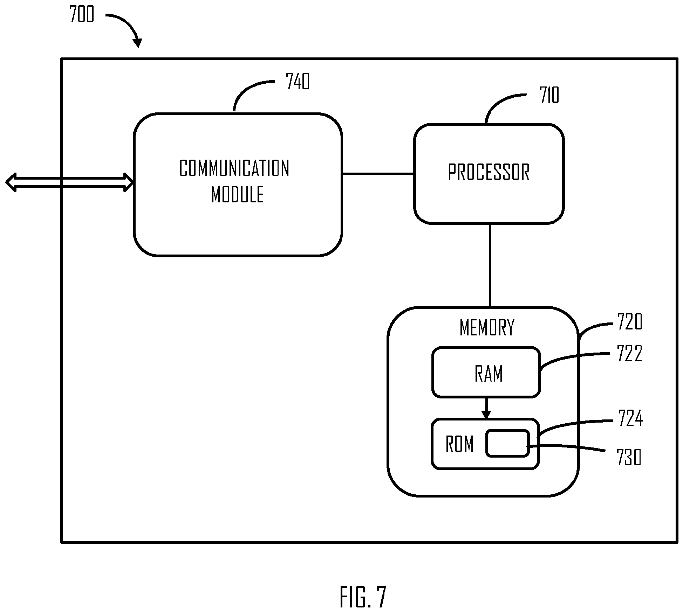

FIG. 7 illustrates a simplified block diagram of a device 700 that is suitable for implementing some example embodiments of the present disclosure. The device 700 may be provided to implement the communication device, for example, first network device 210, the second network device 220 and the third network device 230 as shown in FIG. 2. As shown, the device 700 includes one or more processors 710, one or more memories 720 coupled to the processor 710, and one or more communication modules 740 coupled to the processor 710.

The communication module 740 is for bidirectional communications. The communication module 740 has at least one antenna to facilitate communication. The communication interface may represent any interface that is necessary for communication with other network elements.

The processor 710 may be of any type suitable to the local technical network and may include one or more of the following: general purpose computers, special purpose computers, microprocessors, digital signal processors (DSPs) and processors based on multicore processor architecture, as non-limiting examples. The device 700 may have multiple processors, such as an application specific integrated circuit chip that is slaved in time to a clock which synchronizes the main processor.

The memory 720 may include one or more non-volatile memories and one or more volatile memories. Examples of the non-volatile memories include, but are not limited to, a Read Only Memory (ROM) 724, an electrically programmable read only memory (EPROM), a flash memory, a hard disk, a compact disc (CD), a digital video disk (DVD), and other magnetic storage and/or optical storage. Examples of the volatile memories include, but are not limited to, a random access memory (RAM) 722 and other volatile memories that will not last in the power-down duration.

A computer program 730 includes computer executable instructions that are executed by the associated processor 710. The program 730 may be stored in the ROM 724. The processor 710 may perform any suitable actions and processing by loading the program 730 into the RAM 722.

The embodiments of the present disclosure may be implemented by means of the program 730 so that the device 700 may perform any process of the disclosure as discussed with reference to FIGS. 3 and 4. The embodiments of the present disclosure may also be implemented by hardware or by a combination of software and hardware.

In some example embodiments, the program 730 may be tangibly contained in a computer readable medium which may be included in the device 700 (such as in the memory 720) or other storage devices that are accessible by the device 700. The device 700 may load the program 730 from the computer readable medium to the RAM 722 for execution. The computer readable medium may include any types of tangible non-volatile storage, such as ROM, EPROM, a flash memory, a hard disk, CD, DVD, and the like.

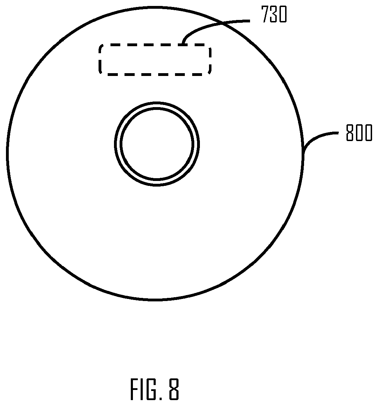

FIG. 8 illustrates a block diagram of an example of a computer readable medium 800 in accordance with some example embodiments of the present disclosure. The computer readable medium 800 has the program 730 stored thereon. It is noted that although the computer readable medium 800 is depicted in form of CD or DVD in FIG. 8, the computer readable medium 800 may be in any other form suitable for carry or hold the program 730.

Generally, various embodiments of the present disclosure may be implemented in hardware or special purpose circuits, software, logic or any combination thereof. Some aspects may be implemented in hardware, while other aspects may be implemented in firmware or software which may be executed by a controller, microprocessor or other computing device. While various aspects of embodiments of the present disclosure are illustrated and described as block diagrams, flowcharts, or using some other pictorial representations, it is to be understood that the block, apparatus, system, technique or method described herein may be implemented in, as non-limiting examples, hardware, software, firmware, special purpose circuits or logic, general purpose hardware or controller or other computing devices, or some combination thereof.

The present disclosure also provides at least one computer program product tangibly stored on a non-transitory computer readable storage medium. The computer program product includes computer-executable instructions, such as those included in program modules, being executed in a device on a target real or virtual processor, to carry out the method as described above with reference to any of FIGS. 5-6. Generally, program modules include routines, programs, libraries, objects, classes, components, data structures, or the like that perform particular tasks or implement particular abstract data types. The functionality of the program modules may be combined or split between program modules as desired in various embodiments. Machine-executable instructions for program modules may be executed within a local or distributed device. In a distributed device, program modules may be located in both local and remote storage media.

Program code for carrying out methods of the present disclosure may be written in any combination of one or more programming languages. These program codes may be provided to a processor or controller of a general purpose computer, special purpose computer, or other programmable data processing apparatus, such that the program codes, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

In the context of the present disclosure, the computer program codes or related data may be carried by any suitable carrier to enable the device, apparatus or processor to perform various processes and operations as described above. Examples of the carrier include a signal, computer readable medium, and the like.

The computer readable medium may be a computer readable signal medium or a computer readable storage medium. A computer readable medium may include but not limited to an electronic, magnetic, optical, electromagnetic, infrared, or semiconductor system, apparatus, or device, or any suitable combination of the foregoing. More specific examples of the computer readable storage medium would include an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. The term "non-transitory," as used herein, is a limitation of the medium itself (i.e., tangible, not a signal) as opposed to a limitation on data storage persistency (e.g., RAM vs. ROM).

Further, while operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, while several specific implementation details are contained in the above discussions, these should not be construed as limitations on the scope of the present disclosure, but rather as descriptions of features that may be specific to particular embodiments. Certain features that are described in the context of separate embodiments may also be implemented in combination in a single embodiment. Conversely, various features that are described in the context of a single embodiment may also be implemented in multiple embodiments separately or in any suitable sub-combination.

Although the present disclosure has been described in languages specific to structural features and/or methodological acts, it is to be understood that the present disclosure defined in the appended claims is not necessarily limited to the specific features or acts described above. Rather, the specific features and acts described above are disclosed as example forms of implementing the claims.

## Claims

1. A first network device for a radio access network, the first network device comprising:
at least one processor; and
at least one memory storing instructions that, when executed by the at least one processor, cause the first network device at least to:
detect an error of communication over a first interface between the first network device and a third network device;
transmit to a second network device of the radio access network, a request for the second network device to check status of a second interface between the second network device and the third network device; and
receive, from the second network device, status information on the second interface, wherein the status information indicates one of the following:
the second interface is operational or
the second interface is non-operational.

2. The first network device of claim 1, the first network device is further caused to:
determine as a cause of the error of the communication based on the status information; and
handle the error of the communication based on the determined cause of the error.

3. The first network device of claim 2, wherein the cause of the error of the communication is one of the following:
a transport layer failure of the first interface, or
a failure in the third network device.

4. The first network device of claim 3, wherein the status information indicates the second interface is operational, the first network device is caused to determine the transport network failure of the first interface as the cause of the error of the communication .

5. The first network device of claim 3, wherein the status information indicates the second interface is non-operational, the first network device is caused to determine the failure in the third network device as the cause of the error of the communication.

6. The first network device of claim 3, wherein the cause of the error of the communication is the failure in the third network device, and another third network device is available as a back-up, the first network device is caused to handle the error by:
setting up another first interface with the another third network device; and
releasing the first interface with the third network device.

7. The first network device of claim 3, wherein the cause of the error of the communication is the failure of the third network device, and another third network device is unavailable as a back-up, the first network device is caused to handle the error of the communication by:
initiating reset procedures for other interfaces of the first network device, wherein the other interfaces exclude the first interface; and
releasing context of one or more terminal devices stored in the first network device.

8. The first network device of any of claims 2-7, wherein the first network device is caused to detect the error of the communication by:
detecting the error of communication over the first interface based on not receiving, from the third network device, a response message to a message transmitted by the first network device to the third network device over the first interface.

9. The first network device of any of claims 2-7, wherein the first network device is caused to detect the error of communication over the first interface by:
detecting the error based on a failure of a transport layer of the first interface.

10. The first network device of claim 3, wherein the cause of the error of communication is the transport network failure of the first interface, the first network device is further caused to:
determine whether a transport layer of the first interface is recovered during a time period.

11. The first network device of claim 10, the first network device is caused to:
based on determining that the transport layer of the first interface is not recovered during the time period,
initiate reset procedures for other interfaces of the first network device, wherein the other interfaces exclude the first interface; and
release context of one or more terminal devices stored in the first network device.

12. The first network device of claim 10, the first network device is caused to:
based on determining that the transport layer of the first interface is recovered during the time period,
keep context of one or more terminal devices stored in the first network device; and
resume operations for the one or more the terminal devices, wherein the operations are paused based on detecting the error of the communication.

13. A second network device for a radio access network, the second network device comprising:
at least one processor; and
at least one memory storing instructions that, when executed by the at least one processor, cause the second network device at least to:
receive, from a first network device of the radio access network, via an interface between the first network device and the second network device, a request for the second network device to check status of a different interface between the second network device and a third network device; and
transmit, to the first network device, status information on the different interface via the interface, wherein the status information indicates one of the following:
the different interface is operational, or
the different interface is non-operational.

14. The second network device of claim 13, wherein the status information indicates the different interface is operational, the second network device is caused to:
transmit, to the third network device, information associated with the request from the first network device.

15. A method comprising:
detecting, at a first network device for a radio access network an error of communication over a first interface between the first network device and a third network device;
transmitting to a second network device of the radio access network, a request for the second network device to check status of a second interface between the second network device and the third network device; and
receiving, from the second network device, status information on the second interface.
